# EUROPÄISCHE PATENTSCHRIFT

(11) **EP 4 065 396 B1**
(45) Veröffentlichungstag und Bekanntmachung des Hinweises auf die Patenterteilung: **19.06.2024**
(21) Anmeldenummer: 20807663.8
(22) Anmeldetag: 28.10.2020
(51) Int. Cl.: B60J 10/00, B23P 19/00, B23P 19/04, B65H 75/18

(54) **DICHTUNGSSTRANG MIT INDIVIDUELLEM IDENTIFIKATIONSMITTEL UND VERFAHREN ZUR APPLIKATION**
SEALING STRAND HAVING AN INDIVIDUAL IDENTIFICATION MEANS, AND APPLICATION METHOD
BANDE D'ÉTANCHÉITÉ PRÉSENTANT UN MOYEN D'IDENTIFICATION INDIVIDUEL ET PROCÉDÉ D'APPLICATION

(30) Priorität: 29.11.2019 DE 102019132555
(43) Veröffentlichungstag der Anmeldung: 05.10.2022
(73) Patentinhaber: CQLT SaarGummi Technologies S.à.r.l., 5544 Remich (LU)
(72) Erfinder: KAST, Christian, 66683 Merzig-Brotdorf (DE)
(74) Vertreter: Patentanwälte Bernhardt / Wolff Partnerschaft mbB
(86) Internationale Anmeldenummer: PCT/EP2020/000180
(87) Internationale Veröffentlichungsnummer: WO 2021/104658

(56) Entgegenhaltungen:
- EP-A1- 2 151 410
- DE-A1-102005 028 069
- US-A1- 2013 153 146
- US-A1- 2019 092 152

## Beschreibung

Die Erfindung betrifft einen Dichtungsstrang nach dem Oberbegriff des Anspruchs 1. Des Weiteren betrifft die Erfindung eine Vorrichtung zur Aufnahme eines derartigen Dichtungsstrangs bei dessen Transport an einen Verarbeitungsort sowie ein Verfahren zur Applikation von derartigen Dichtungssträngen an einer Fahrzeugkarosserie.

Durch Benutzung sind Vorrichtungen zur Aufnahme eines insbesondere extrudierten Dichtungsstrangs bei dessen Transport zu einem Verarbeitungsort bekannt, welche eine den Dichtungsstrang als Wicklung aufnehmende Spule umfassen. Die gewickelte Spule ist zur vorübergehenden Einbeziehung in einen den Dichtungsstrang unter Drehung der Spule fortlaufend zu Dichtungen an Fahrzeugkarosserien verarbeitenden Applikationseinrichtung vorgesehen. Auf der Spule ist ein durchgehender ggf. aus Einzellängen zusammengesetzter Profilstrang in Form eines sogenannten Endlosstrangs aufgewickelt, aus welchem durch Abtrennen die Dichtungsstränge gebildet werden. Sobald der letzte Dichtungsstrang entnommen ist, wird die leere Spule entfernt und eine neue Spule mit aufgewickeltem Profilstrang der Applikationseinrichtung zugeführt. Da die Profilstränge und damit die Dichtungsstränge auf den Spulen dem gleichen Typ entsprechen und daher im Wesentlichen die gleichen geometrischen und physikalischen Eigenschaften aufweisen, werden die Spulen nach dem Zufallsprinzip oder auch in der Reihenfolge der Anlieferung gemäß dem Prinzip "First in - First out" (FIFO) der Applikationseinrichtung zugeführt. Dabei werden jedoch Fertigungstoleranzen des Profilstrangs und damit der Dichtungsstränge nicht berücksichtigt und es können Abweichungen in den geometrischen und/oder physikalischen Eigenschaften innerhalb der Fertigungstoleranz zwischen den Dichtungssträngen zweier Spulen vorhanden sein. Auch können diese geometrischen und/oder physikalischen Eigenschaften z.B. aufgrund von Schwankungen im Herstellungsprozess, nicht nur von Spule zu Spule, sondern auch über die Länge des auf einer Spule aufgewickelten Profilstrangs oder Dichtungsstrangs unterschiedlich ausgebildet sein. Wenn beispielsweise auf einer Spule 1.000 m Profilstrang aufgewickelt ist, so können z.B. bzgl. der Härte der Gummimischung die ersten 300 m des Profilstrangs eher an der maximal zulässigen Toleranz, die weiteren 300 m eher im Nominalbereich und die letzten 400 m eher im Minimalbereich der zulässigen Härte liegen. Selbst wenn sich die Veränderungen der technischen Eigenschaften des Profilstrangs und der Dichtungsstränge über die Länge innerhalb der zulässigen Toleranzen bewegen, können sich hierdurch Einbußen hinsichtlich der Anlagenverfügbarkeit, der Applikationsqualität und dem reibungslosen Betrieb der Applikationseinrichtung ergeben. Beispielsweise können die Abweichungen dazu führen, dass sich die Lageposition des Dichtungsstrangs bei der Applikation leicht verändert und sich somit eine geänderte Lage der Dichtung an einer Fahrzeugkarosserie ergibt.

Aus US 2013/153146 A1 geht eine Vorrichtung zur Aufbringung eines Dichtungsprofils auf die Karosserie eines Kraftfahrzeugs hervor, wobei durch eine kontrollierte Zugspannung bei der Aufbringung des Dichtungsprofils ein unbeabsichtigtes Ablösen des Dichtungsprofils im Bereich enger Kurvenradien der Fahrzeugkarosserie verhindert werden soll. Hierzu weist das Dichtungsprofil maschinenlesbare Daten, beispielsweise auf einem Strichcode, auf, welche von der Applikationsvorrichtung eingelesen und zur Einstellung der gewünschten Zugspannung verwendet werden. Aus EP 2 151 410 A1 und US 2019/092152 A1 ist bekannt, eine Speichereinrichtung in Form einer Spule für ein strangförmiges Wickelgut mit einem elektronischen Prozessorelement beispielsweise in Form eines RFID-Tags für die Speicherung von Materialparametern wie die Position von Fehlstellen auszustatten. Gemäß dem aus DE 10 2005 028069 A1 bekannten Verfahren, werden an einem Dichtungsprofil bei der Herstellung die Fehlerstellen detektiert und abgespeichert, um die als fehlerhaft ermittelten Abschnitte später abzutrennen.

Aufgabe der Erfindung ist es daher, eine höhere Prozesssicherheit (Wiederholgenauigkeit) und Qualität der Applikation von Dichtungssträngen an einer Fahrzeugkarosserie zu ermöglichen.

Diese Aufgabe wird dadurch gelöst, dass eine oder mehrere ausgewählte physikalische und/oder geometrische Eigenschaften des Dichtungsstrangs in jeweils einer vorgegebenen Fertigungstoleranz liegen und dass jede Fertigungstoleranz in mehrere Toleranzbereiche unterteilt ist, wobei das Identifikationsmittel ausgebildet ist, den Zugriff auf einen strangspezifische Toleranzbereich des gesamten Dichtungsstrangs oder auf Toleranzbereiche von verschiedenen Teilbereichen des Dichtungsstrangs zu ermöglichen.. Das Identifikationsmittel, welches dem Dichtungsstrang zur Bereitstellung individueller Merkmale zu dem Dichtungsstrang zugeordnet ist, kann direkt auf dem Dichtungsstrang, dessen Verpackung oder einer Transportvorrichtung für den Dichtungsstrang angeordnet sein.

Bevorzugt kann es sich bei dem Identifikationsmittel um ein elektronisch auslesbares Identifikationsmittel, beispielsweise um einen Strichcode, einen QR-Code oder einen RFID-Chip, handeln. Alternativ oder zusätzlich kann das Identifikationsmittel eine durch einen Menschen lesbare Codierung, wie einen Farb- oder Zahlencode, aufweisen.

Das Identifikationsmittel ermöglicht vorteilhaft einen Zugriff auf für die Applikation relevanten gesamtheitlichen individuellen Merkmale des gesamten Profilstrangs bzw. Dichtungsstrangs oder gegebenenfalls voneinander abweichende Merkmale zu verschiedenen Teilbereichen des Profilstrangs bzw. Dichtungsstrangs. Als individuelle Merkmale sind strangspezifische Merkmale/Informationen zu verstehen, welche einen Dichtungsstrang von einem anderen, gleichartigen Dichtungsstrang unterscheiden, aufgrund derer insbesondere sinnvollerweise eine individuelle Anpassung der Applikationseinrichtung erfolgen sollte. Gleichartige Dichtungsstränge sind baugleiche Dichtungsstränge, welche abgesehen von Abweichungen bei der Fertigung, wie beispielsweise Fertigungstoleranzen oder der Position/Anzahl von Fehlstellen, identisch ausgebildet und für dieselbe Position an einer Fahrzeugkarosserie vorgesehen sind. Zu den strangspezifischen individuellen Merkmalen zählen beispielsweise die Abweichung von Sollwerten an bestimmten Kontrollpunkten, die erfindungsgemäße Zuordnung zu Toleranzbereichen, welche durch Unterteilung des Bereichs einer bestimmten zulässigen Fertigungstoleranz gebildet werden, und die Anzahl und/oder Position von Fehlstellen. Die Toleranzbereiche können insbesondere betreffend einer oder mehrerer ausgewählter physikalischer und/oder geometrischer Eigenschaften des Dichtungsstrangs, wie beispielsweise die geometrischen Abmessungen bestimmter Querschnittsbereiche des Dichtungsstrangs oder des gesamten Dichtungsstrangs, die Dichte und/oder Härte der verwendeten Materialien, den Reibwert der verwendeten Materialien und/oder der Oberflächen(-beschichtungen) wie beispielsweise Gleitlacke oder Beflockungen, definiert werden.

Alternativ zu der Zuordnung gesamtheitlicher individueller Merkmale zu einem gesamten Profilstrang bzw. Dichtungsstrang, aus welcher die optimale Reihenfolge bei der Zuführung von Spulen mit Profilsträngen mit ähnlichen Eigenschaften zu bestimmten Applikationsanlagen ermittelt werden kann, ist es ebenfalls denkbar, dass nicht nur die Spule als ganze Einheit, sondern die auf der Spule aufgewickelten Dichtungsstränge fortlaufend (z.B. ein Mal pro Meter) bzgl. der oftmals unterschiedlichen technischen Eigenschaften bewertet werden und diese Daten als Merkmale über das Identifikationsmittel bereitgestellt werden. Das Identifikationsmittel kann folglich auch ausgebildet sein, den Zugriff auf für die Applikation relevante, über die Länge des Profilstrangs bzw. Dichtungsstrangs voneinander abweichende Merkmale zu verschiedenen Teilbereichen des Profilstrangs bzw. Dichtungsstrangs zu ermöglichen. Die Größe und Anzahl der Teilbereiche ist dabei frei wählbar, so dass eine gewünschte Auflösung einstellbar ist. Hierdurch kann die Applikationsanlage jeweils kurz vor oder während der Applikation automatisch auf die jeweiligen Toleranzlagen der technischen Eigenschaften des als nächstes zu verarbeitenden Abschnitts des Dichtungsstrangs durch die Anpassung von Applikationsparametern eingestellt werden (oder sich selbst computergesteuert einstellen), wodurch die Applikationsqualität verbessert wird. Das Identifikationsmittel kann beispielshaft elektronisch einfach ausgelesen und die Dichtungsstränge entsprechend dieser Merkmale vorzugsweise vollautomatisiert auf eine Fahrzeugkarosserie appliziert werden, wie nachfolgend noch im Detail beschrieben wird.

Vorteilhaft können die Merkmale in dem Identifikationsmittel enthalten sein oder das Identifikationsmittel kann eine Zuordnung zu einem externen Datensatz, beispielsweise einem in einem Datenspeicher gelagerten Datensatz, ermöglichen. Bei dem Datenspeicher kann es sich beispielsweise um einen über das Internet oder ein Netzwerk verfügbaren Datenspeicher (Cloud-Speicher) handeln, auf welchen bevorzugt sowohl der Hersteller des Dichtungsstrangs als auch der Verarbeiter, welcher den Dichtungsstrang auf die Kraftfahrzeugkarosserie aufbringt, Zugriff hat.

Des Weiteren wird eine Vorrichtung zur Aufnahme eines insbesondere extrudierten Dichtungsstrangs bei dessen Transport zu einem Verarbeitungsort, mit einem Identifikationsmittel zur Bereitstellung individueller Merkmale zu dem Dichtungsstrang und einer den Dichtungsstrang als Wicklung aufnehmenden Spule beansprucht, bei welcher die bewickelte Spule zur vorübergehenden Einbeziehung in einen den Dichtungsstrang unter Drehung der Spule fortlaufend zu Dichtungen an Fahrzeugkarosserien verarbeitenden Applikationseinrichtung vorgesehen ist, wobei eine oder mehrere ausgewählte physikalische und/oder geometrische Eigenschaften des Dichtungsstrangs in jeweils einer vorgegebenen Fertigungstoleranz liegen. Die Vorrichtung ist dadurch gekennzeichnet, dass jede Fertigungstoleranz in mehrere Toleranzbereiche unterteilt ist und das Identifikationsmittel ausgebildet ist, den Zugriff auf einen strangspezifische Toleranzbereich des gesamten Dichtungsstrangs oder auf Toleranzbereiche von verschiedenen Teilbereichen des Dichtungsstrangs zu ermöglichen.

Das Identifikationsmittel kann beispielsweise als elektronisch auslesbares Identifikationsmittel, insbesondere als Strichcode, QR-Code oder RFID-Chip, ausgebildet und elektronisch auslesbar an der Vorrichtung befestigt sein. Alternativ oder zusätzlich kann das Identifikationsmittel eine durch einen Menschen lesbare Codierung, wie einen Farb- oder Zahlencode, aufweisen.

Das Identifikationsmittel ermöglicht vorteilhaft einen Zugriff auf für die Applikation relevante gesamtheitliche individuelle Merkmale der auf der Spule aufgewickelten Dichtungsstränge oder voneinander abweichende Merkmale zu verschiedenen Teilbereichen der Dichtungsstränge. Hierzu können beispielsweise die oben beschriebenen erfindungsgemäßen Toleranzbereiche sowie die Anzahl und/oder Position von Fehlstellen zählen. Das Identifikationsmittel kann beispielsweise elektronisch ausgelesen, die Spulen entsprechend den Identifikationsmitteln einer Applikationseinrichtung zugeführt und die Dichtungsstränge entsprechend dieser Merkmale vorzugsweise vollautomatisiert auf eine Fahrzeugkarosserie appliziert werden, wie nachfolgend noch im Detail beschrieben wird.

Vorteilhaft können die Merkmale in dem Identifikationsmittel enthalten sein oder das Identifikationsmittel kann eine Zuordnung zu einem externen Datensatz, beispielsweise einem in einem Datenspeicher gelagerten Datensatz, ermöglichen. Bei dem Datenspeicher kann es sich beispielsweise um einen über das Internet oder ein Netzwerk verfügbaren Datenspeicher (Cloud-Speicher) handeln, auf welchen bevorzugt sowohl der Hersteller des Dichtungsstrangs als auch der Verarbeiter, welcher den Dichtungsstrang auf die Kraftfahrzeugkarosserie aufbringt, Zugriff hat.

Des Weiteren wird ein Verfahren zur Applikation von Dichtungssträngen an einer Fahrzeugkarosserie beansprucht. Das Verfahren, bei welchem vor der Applikation individuelle Merkmale der Dichtungsstränge erfasst werden und die Applikation in Abhängigkeit hiervon angepasst wird, ist dadurch gekennzeichnet, dass mehrere Dichtungsstränge vorhanden sind, bei denen eine oder mehrere ausgewählte physikalische und/oder geometrische Eigenschaften jeweils in einem Bereich einer vorgegebenen zulässigen Fertigungstoleranz liegt bzw. liegen, wobei jede Fertigungstoleranz in mehrere Toleranzbereiche unterteilt wird und den Identifikationsmitteln der Dichtungsstränge die Zuordnung des jeweiligen Dichtungsstrangs zu einem Toleranzbereich zu entnehmen ist. So kann beispielsweise eine bestimmte Abmessung des Dichtungsstrangs im Querschnitt eine zulässige Fertigungstoleranz von +/- 0,2 mm aufweisen. Diese Fertigungstoleranz kann weiter beispielhaft in vier gleich große Toleranzbereiche, also in Intervallschreibweise die Toleranzbereiche [0,2 mm; 0,1 mm[, [0,1 mm; 0,0 mm[, [0,0 mm; - 0,1 mm[ und [- 0,1 mm; - 0,2 mm] unterteilt und dem Identifikationsmittel die Zuordnung des jeweiligen Dichtungsstrangs zu einem Toleranzbereich entnommen werden. Alternativ können entsprechende Toleranzbereiche zum Beispiel auch innerhalb der Fertigungstoleranz betreffend den Reibwert einer Oberfläche bzw. Oberflächenbeschichtung, der Dichte, der Härte etc. des Dichtungsstrangs definiert und den Dichtungssträngen über das Identifikationsmittel zugeordnet werden.

Die Anpassung kann sich dabei auf eine bestimmte Reihenfolge der Applikation der Dichtungsstränge und/oder ein individuelles Verstellen der Applikationseinrichtung beziehen, wie nachfolgend noch näher erläutert wird.

Vorteilhaft können die Dichtungsstränge durch Abtrennen von einem auf einer Spule aufgewickelten Profilstrang gebildet und individuelle Merkmale der Dichtungsstränge nach dem Abwickeln des Profilstrangs und/oder vor dem Aufwickeln des Profilstrangs auf die Spule erfasst werden. Werden vor dem Aufwickeln des Profilstrangs auf die Spule individuelle Merkmale erfasst, kann dem Profilstrang bzw. dem Dichtungsstrang ein insbesondere elektronisch auslesbares Identifikationsmittel zugordnet werden, über welches die individuellen Merkmale zugänglich sind. Damit können die individuellen Merkmale des Profilstrangs einer jeden Spule schon vor dem Abwickeln des Profilstrangs ausgelesen und die jeweils passende Spule für die Applikation vorab ausgewählt werden. Ein derartiger, auch als Endlosdichtung bezeichneter Profilstrang ermöglicht einen besonders einfachen und platzsparenden Transport zum Verarbeiter, wo die Dichtungsstränge abgetrennt und an einer Fahrzeugkarosserie angebracht/appliziert werden.

Das Identifikationsmittel ermöglicht vorteilhaft einen Zugriff auf für die Applikation relevante gesamtheitliche individuelle Merkmale des gesamten Profilstrangs bzw. Dichtungsstrangs oder gegebenenfalls voneinander abweichende Merkmale zu verschiedenen Teilbereichen des Profilstrangs bzw. Dichtungsstrangs. So kann zum Beispiel durch eine intelligente Zuordnung von Spulen bzw. Dichtungssträngen zu speziellen Applikationsanlagen gewährleistet werden, dass an einer bestimmten Stelle der Fahrzeugkarosserie (z.B. der linken hinteren Fahrzeugtür eines viertürigen Fahrzeugs) nur Dichtungsstränge verbaut werden, bei denen eine oder mehrere ausgewählte physikalische und/oder geometrische Eigenschaften identisch sind oder sich in einem definierten Bereich bewegen, welcher kleiner ist als der für dieses Merkmal gesamt zulässige Toleranzbereich.

Aufgrund der kontinuierlichen Veränderung der Fertigungsparameter bei der Herstellung eines Dichtungsstrangs, insbesondere bei der Extrusion, sind oftmals die Abweichungen zwischen ohne Unterbrechung aufeinanderfolgend hergestellten Dichtungssträngen am geringsten. Es kann daher vorteilhaft sein, eine leere Spule durch eine Spule zu ersetzen, deren Profilstrang bzw. Dichtungsstränge in kurzem zeitlichem Abstand zum zuvor verarbeiteten Profilstrang bzw. den Dichtungssträngen der vorangegangen genutzten Spule hergestellt wurden. Mit Hilfe der individuellen Merkmale kann diese intelligente Auswahl erfolgen, so dass gewährleistet ist, dass kein unbeabsichtigter Versatz des Dichtungsstrangs aufgrund von zu großen Abweichungen der Merkmale bei der Applikation an der Fahrzeugkarosserie entsteht.

In einer vorteilhaften Ausführungsform kann die Auswahl eines als nächstes zu applizierenden Dichtungsstrangs aus mehreren gleichartigen Dichtungssträngen anhand der ermittelten individuellen Merkmale bzw. dem Identifikationsmittel erfolgen. Alternativ oder zusätzlich können die Dichtungsstränge an der Fahrzeugkarosserie mittels einer Applikationseinrichtung appliziert werden, welche in Abhängigkeit der ermittelten Merkmale bzw. des Identifikationsmittels verstellt wird. Hierdurch kann gewährleistet werden, dass nacheinander Dichtungsstränge verarbeitet werden, welche definierte geometrische und/oder physikalische Eigenschaften, insbesondere mit geringen Abweichungen, aufweisen und/oder zusätzlich eine Anpassung der Applikationseinrichtung erfolgt, wodurch eine möglichst gleichbleibende Funktion der Dichtungsstränge an der Fahrzeugkarosserie gewährleistet ist.

Die Anpassung bzw. Verstellung der Applikationseinrichtung kann beispielsweise mit der Zielsetzung erfolgen, eine gleichbleibende Positionierung der Dichtungsstränge an den Fahrzeugkarosserien und damit eine besonders gute optische Erscheinung zu gewährleisten. Hierzu wird die Applikationseinrichtung in Abhängigkeit von den über das jeweilige Identifikationsmittel zugänglichen individuellen Merkmalen des Dichtungsstrangs derart verstellt, dass der Dichtungsstrang beispielsweise zu einer Kante an der Fahrzeugkarosserie einen gleichbleibenden Abstand aufweist.

Alternativ kann die Anpassung bzw. Verstellung der Applikationseinrichtung auch mit der Zielsetzung erfolgen, eine gleichbleibende Dichtwirkung zu gewährleisten. Neben der eigentlichen Qualität der Abdichtung zählt hierzu beispielsweise auch die Größe der Schließkraft. Hierzu wird die Applikationseinrichtung in Abhängigkeit von den über das jeweilige Identifikationsmittel zugänglichen individuellen Merkmalen des Dichtungsstrangs derart verstellt, dass der Dichtungsstrang mit dem gegenüberliegenden Element der Fahrzeugkarosserie, beispielsweise der Fahrzeugseitenwand, in der Schließstellung eine gleichbleibende Überlappung aufweist und damit die Verformung sowie die Schließkräfte bei jedem Dichtungsstrang identisch sind.

Vorteilhaft kann die Applikationseinrichtung derart verstellt werden, dass in einem ersten Dichtungsabschnitt der Fahrzeugkarosserie, insbesondere einem einfach einsehbaren Dichtungsabschnitt wie beispielsweise der Oberseite und den Seiten einer Fahrzeugtür, eine optisch ansprechende, gleichbleibende Positionierung und in einem zweiten Dichtungsabschnitt der Fahrzeugkarosserie, insbesondere einem schlecht einsehbaren Dichtungsabschnitt wie beispielsweise der Unterseite einer Fahrzeugtür, eine gleichbleibende Dichtwirkung gewährleistet ist. In dem schlecht einsehbaren Dichtungsabschnitt ist ein über die Länge des Dichtungsstrangs unterschiedliche Positionierung an der Fahrzeugtür, beispielsweise gemessen an einem unterschiedlichen Abstand zu einer Kante einer Fahrzeugtür, optisch nicht oder nur eingeschränkt erkennbar, so dass die Positionierung des Dichtungsstrangs in diesem Abschnitt ausschließlich in Hinblick auf eine gleichbleibende Dichtwirkung erfolgen kann.

Über die Positionierung des Dichtungsstrangs in dem schlecht einsehbaren Dichtungsabschnitt kann auch ein Ausgleich gegenüber der Dichtwirkung in dem gut einsehbaren Dichtungsabschnitt erfolgen. Wurde der Dichtungsstrang in dem gut einsehbaren Dichtungsabschnitt beispielsweise derart positioniert, dass generell eher höhere Schließkräfte entstehen, kann der Dichtungsstrang in dem schlecht einsehbaren Dichtungsabschnitt zurückversetzt positioniert werden, so dass die Überlappung und die Schließkräfte in diesem Abschnitt geringer sind und in Summe über den gesamten Dichtungsstrang eine gleichbleibende Schließkraft bzw. Dichtwirkung erreicht wird.

Es ist auch möglich, beispielsweise mit Hilfe künstlicher Intelligenz (KI), aus den Fertigungstoleranzen mehrerer physikalischer und/oder geometrischer Eigenschaften gemeinsame Toleranzbereiche mit gleicher Wirkung auf die Positionierung bei der Applikation als Merkmale zu definieren und die Dichtungsstränge diesen zuzuordnen. So haben beispielsweise der Reibwert der Oberfläche des Dichtungsstrangs und die Abmessungen bestimmter Querschnittsbereiche des Dichtungsstrangs gleichermaßen den Effekt auf die Applikation des Dichtungsstrangs an einer Fahrzeugkarosserie, dass die Position an der Karosserie geringfügig in eine Richtung verschoben ist. Es ist daher denkbar, mehrere gemeinsame Toleranzbereiche zu definieren, welche je einen Toleranzbereich des Reibwerts und der Abmessung beinhalten und diese den Dichtungssträngen entsprechend zuzuordnen. Über das Identifikationsmittel kann dann der gemeinsame Toleranzbereich ausgelesen werden und es ist gewährleistet, dass alle Dichtungsstränge mit denselben gemeinsamen Toleranzbereichen mittels einer hierfür angepassten Applikationseinrichtung an der gewünschten Position an der Fahrzeugkarosserie appliziert werden. Dieser Prozess ist fortlaufend anpassbar, da jederzeit die Positionierung beeinflussende Eigenschaften bzw. Kombination von Eigenschaften durch Versuche oder auch künstliche Intelligenz ermittelt und die die Applikationseinrichtung entsprechend dieser Merkmale angepasst werden kann.

Besonders vorteilhaft kann bei der Applikation ein nachfolgender Dichtungsstrang ausgewählt werden, bei dem das Merkmal einer oder mehrerer ausgewählter geometrischer und/oder physikalischer Eigenschaften nur in einem definierten Bereich von einem zuletzt applizierten Dichtungsstrang abweicht und/oder das Merkmal den gleichen Toleranzbereich aufweist wie bei dem zuletzt applizierten Dichtungsstrang. Alternativ kann auch derjenige Dichtungsstrang ausgewählt werden, welcher im Vergleich zu einem zuletzt applizierten Dichtungsstrang die kleinsten Abweichungen hinsichtlich dieser Merkmale bzw. dieses Merkmals aufweist. Auf diese Weise wird verhindert, dass die direkt nacheinander applizierten Dichtungsstränge einer vorangegangen genutzten und einer nachfolgenden Spule an einer Fahrzeugkarosserie eine unerwünschte, sprungartige Änderung in den Merkmalen der geometrischen und/oder physikalischen Eigenschaften aufweisen, was insbesondere zu einem Versatz bei der Positionierung des Dichtungsstrangs führen kann.

In einer vorteilhaften Ausführungsform werden mehrere Spulen mit je einem Profilstrang vorgehalten/gelagert, wobei jeder Spule ein insbesondere elektronisch auslesbares Identifikationsmittel mit individuellen Merkmalen zu dem Profilstrang und damit den Dichtungssträngen zugeordnet ist. Dem Identifikationsmittel kann vorteilhaft als Merkmal der Toleranzbereich betreffend eine oder mehrere physikalische und/oder geometrische Eigenschaft des Profilstrangs bzw. Dichtungsstrangs entnommen und entsprechend die Reihenfolge der Zuführung der Spulen zu einer den Dichtungsstrang verarbeitenden Applikationseinrichtung festgelegt werden.

Das Identifikationsmittel an der Spule kann dabei ein gesamtheitliches Merkmal zu dem gesamten Profilstrang oder für bestimmte Profilstrangabschnitte, aus welchen die Dichtungsstränge gebildet werden, individuelle Merkmale enthalten. So kann beispielsweise das Merkmal enthalten sein, dass die ersten 50 m des Profilstrangs einem ersten Toleranzbereich zuzuordnen sind und die restliche Länge einem anderen Toleranzbereich zuzuordnen ist.

Um unerwünschte Sprünge in den geometrischen und/oder physikalischen Eigenschaften der applizierten Dichtung zu vermeiden, kann nacheinander der Dichtungsstrang von denjenigen Spulen entnommen werden, welche gemäß den Identifikationsmitteln als Merkmal gleiche oder ähnliche geometrische und/oder physikalische Eigenschaften aufweisen, beispielsweise in gleichem oder angrenzendem Toleranzbereich liegen.

In einer alternativen Ausführungsform werden die Dichtungsstränge ohne eine Vorsortierung hinsichtlich ihrer technischen Eigenschaften einfach fortlaufend verarbeitet, jedoch werden ggf. vorhandene Änderungen der Eigenschaften fortlaufend berücksichtigt und die Applikationsanlage automatisch hierauf eingestellt, um ein optimales Applikationsergebnis bzw. eine optimale Funktion des Dichtungssystems im Fahrzeug zu realisieren.

Wie beschrieben können die Dichtungsstränge an einer Fahrzeugkarosserie (Fahrzeugtür) mittels einer Applikationseinrichtung appliziert werden und die Positionierung der Dichtungsstränge an der Fahrzeugkarosserie durch Verstellen der Applikationseinrichtung in Abhängigkeit von dem Identifikationsmittel, insbesondere dem daraus auslesbaren Toleranzbereich des jeweiligen Dichtungsstrangs, einstellbar sein, um eine unerwünschte Veränderung der Position oder Funktionseigenschaften der Dichtungsstränge mit unterschiedlichen Toleranzbereichen an der Fahrzeugkarosserie zu verhindern. Wenn ein Dichtungsstrang mit einem anderen Toleranzbereich als der des zuletzt applizierten Dichtungsstrangs verwendet wird, kann die Applikationseinrichtung derart verstellt werden, dass eine ungewollte Verschiebung des Dichtungsstrangs an der Karosserie kompensiert und der Dichtungsstrang an derselben Position wie der zuletzt applizierte Dichtungsstrang angebracht wird. Die Verstellung kann dabei für jeden Dichtungsstrang nur einmal vor der Applikation oder auch während der Applikation, insbesondere kontinuierlich, erfolgen.

Vorteilhaft werden die individuellen Merkmale zu dem Dichtungsstrang über eine zerstörungsfreie Prüfung, insbesondere bei der Herstellung des Dichtungsstrangs, ermittelt. So kann beispielsweise die Dicke des aufgetragenen Gleitlacks an der Fertigungslinie online und kontaktlos ermittelt werden, wobei über eine Korrelation ein indirekter Rückschluss auf den Reibwert der Oberfläche möglich ist. Alternativ kann der Reibwert über ein die Dichtungsoberfläche berührendes Element direkt ermittelt werden. Ebenso ist es möglich, z.B. über ein berührungsloses System den Profilquerschnitt online abzutasten und somit online und zerstörungsfrei die Geometrie sowie die Toleranzlage der Geometrie des Dichtungsprofils zu ermitteln. Alternativ oder zusätzlich können individuelle Merkmale auch durch eine Probenentnahme am Anfang, in einem Zwischenbereich und/oder am Ende eines Profilstrangs bzw. Dichtungsstrangs, ermittelt werden. Die abgetrennten Probestücke können hierzu in einem Labor ausgewertet und die Ergebnisse über das Identifikationsmittel zugänglich abgespeichert werden. Das Heraustrennen in dem Zwischenbereich kann dabei lediglich an ohnehin zu entfernenden Fehlstellen oder auch bewusst in einem fehlerfreien Abschnitt erfolgen, um Erkenntnisse über Eigenschaften des Dichtungsprofils zu erhalten, welche nicht ohne ein Heraustrennen zugänglich wären. Hierzu zählen beispielsweise üblicherweise die Innenkontor von Hohlräumen oder die Gasblasenverteilung, welche ansonsten nur durch aufwendige Bestrahlungsverfahren ermittelt werden könnte.

Die individuellen Merkmale beinhalten bevorzugt mindestens zwei, besonders bevorzugt mindestens drei und vorteilhaft mindestens fünf physikalische und/oder geometrische Eigenschaften des gesamten Dichtungsstrangs bzw. Profilstrangs oder jeweils zu den verschiedenen Teilbereichen. Die Merkmale des Dichtungsstrangs können bei der Applikation mit weiteren Daten, welche dem Dichtungsstrang nicht direkt zugeordnet sind, ergänzt werden, um die Applikationseinrichtung in Hinblick auf den jeweils zu applizierenden Dichtungsstrang optimal einstellen zu können. Weitere Daten können beispielsweise den Verschleiß wesentlicher Bauteile der Applikationseinrichtung betreffen, beispielsweise den Durchmesser einer Andrückrolle für den Dichtungsstrang, die Temperatur und/oder die Luftfeuchtigkeit bei der Verarbeitung, den Grad der Verschmutzung etc.

Das Identifikationsmittel kann dem Dichtungsstrang bzw. Profilstrang beispielsweise auch über einen ggf. digitalen Lieferschein zugeordnet sein, welcher mit dem Dichtungsstrang bzw. der Aufnahmevorrichtung für den Dichtungsstrang geliefert bzw. bereitgestellt wird. Die über das Identifikationsmittel beziehbaren Merkmale können dabei die individuellen Merkmale zu allen, ggf. auf mehreren Spulen verteilten Dichtungssträngen bzw. Profilsträngen umfassen, wobei an den Spulen Identifikationsmittel zur Zuordnung der Spulen vorhanden sind. Damit kann besonders schnell und einfach eine intelligente Zuführung der gelieferten Dichtungsstränge zu der oder den Applikationseinrichtungen erfolgen.

Weitere Besonderheiten und Vorzüge der Erfindung ergeben sich aus der folgenden Beschreibung bevorzugter Ausführungsbeispiele anhand der Zeichnungen. Es zeigen:
- Fig. 1: eine perspektivische Darstellung einer Abspulvorrichtung mit einer einen Profilstrang aufnehmenden Spule;
- Fig. 2: eine Schnittdarstellung eines Dichtungsstrangs an einer Fahrzeugkarosserie in einem Applikationsschritt;
- Fig. 3: eine Schnittdarstellung eines an einer Fahrzeugkarosserie befestigten Dichtungsstrangs;
- Fig. 4: eine Detailansicht der Darstellung von Figur 3;
- Fig.5: einen exemplarischer Datensatz betreffend individuelle Merkmale eines Dichtungsstrangs und
- Fig. 6: eine Seitenansicht auf eine Fahrzeugtür mit einem Dichtungsstrang.

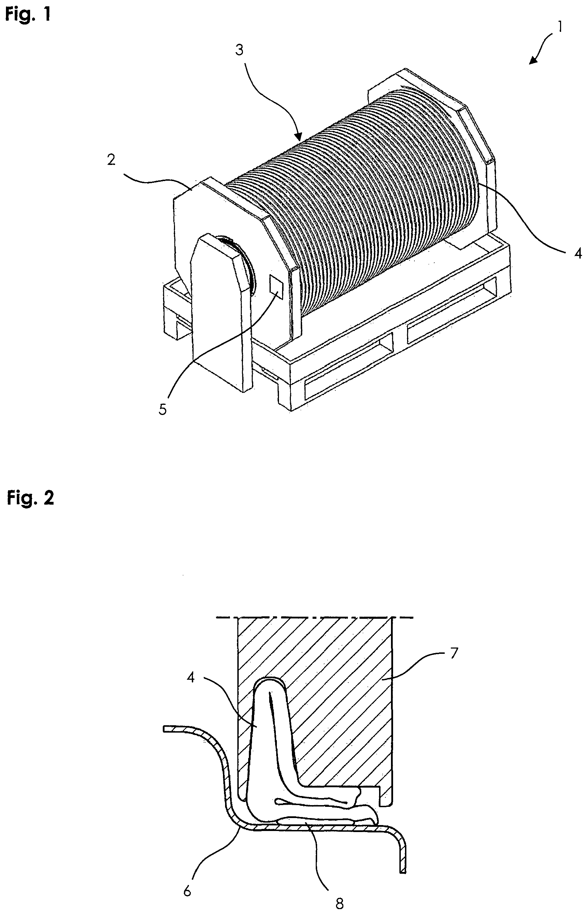

In Figur 1 ist eine perspektivische Darstellung einer Transportvorrichtung innerhalb einer Abspulvorrichtung 1 mit einer Spule 2 gezeigt. Auf der Spule 2 ist ein Profilstrang 3 aufgewickelt. Bei dem Profilstrang 3 kann es sich insbesondere um einen extrudierten Elastomerstrang handeln. Durch Abtrennen von Teilstücken können aus dem Profilstrang 3 einzelne Dichtungsstränge 4 hergestellt werden, wie sie in den nachfolgenden Figuren gezeigt sind. Zur Ausgestaltung der Transportvorrichtung 1 wird auf die wie WO 2016/097364 A1 Bezug genommen.

Die Transportvorrichtung 1 mit der den Profilstrang 3 bzw. die Dichtungsstränge 4 als Wicklung aufnehmenden Spule 2 dient zum Transport des Profilstrang 3 bzw. der Dichtungsstränge 4 zu einem Verarbeitungsort, bei welchem die bewickelte Spule 2 vorübergehend in eine nicht gezeigte Applikationseinrichtung einbezogen wird. Die Applikationseinrichtung ist ausgebildet, unter Drehung der Spule 2 fortlaufend den Profilstrang 3 abzuwickeln und von dem Profilstrang 3 Dichtungsstränge 4 abzutrennen. Der Dichtungsstrang 4 wird dann in der Applikationseinrichtung an einer Fahrzeugtür 6 appliziert, insbesondere mittels Kleben, und bildet beispielsweise eine Türdichtung. Anstelle der Fahrzeugtür 6 kann der Dichtungsstrang 4 auch an anderen verschließbaren Öffnungen einer Fahrzeugkarosserie angeordnet werden. Zur Fahrzeugkarosserie zählen insofern auch die jeweiligen Schließelemente wie Fahrzeugtüren, Heckklappen etc.

An der Transportvorrichtung 1 ist ein Identifikationsmittel 5 zur Bereitstellung individueller Merkmale zu dem Dichtungsstrang 4 angeordnet. Das Identifikationsmittel 5, bei welchem es sich beispielsweise um einen elektronisch auslesbaren Strichcode, QR-Code, RFID-Chip oder einfach eine Kombination aus Zahlen und/oder Buchstaben (z.B. dem Herstelldatum/-uhrzeit der Dichtung) handeln kann, ist ausgebildet, den Zugriff auf für die Applikation relevante Merkmale des Dichtungsstrangs 4 zu ermöglichen. Hierzu können die Merkmale in dem Identifikationsmittel 5 enthalten sein oder das Identifikationsmittel 5 kann durch Verlinkung eine Zuordnung zu einem externen Datensatz, beispielsweise einem Cloud-Speicher, ermöglichen.

Die Merkmale in dem Identifikationsmittel 5 können allgemeine Angaben zu dem Profilstrang 3 bzw. dem Dichtungsstrang 4 wie beispielsweise eine allgemeine Produktnummer enthalten. Entscheidend ist jedoch, dass das Identifikationsmittel 5 strangspezifische individuelle Merkmale zu dem aufgewickelten Profilstrang 3 bzw. dem Dichtungsstrang 4 umfasst, beispielsweise einen Toleranzbereich, welcher durch Unterteilung des Bereichs der Fertigungstoleranz betreffend eine oder mehrere physikalische und/oder geometrische Eigenschaften des Profilstrang 3 bzw. Dichtungsstrangs 4 gebildet ist, und/oder die Position von Fehlstellen. Diese individuellen Merkmale betreffen ausschließlich den Profilstrang 3 bzw. die hiervon abgetrennten Dichtungsstränge 4, welche auf der mit dem Identifikationsmittel 5 gekennzeichneten Spule 2 aufgewickelt sind. Mittels dieser Merkmale kann die Applikation der Dichtungsstränge 4 an einer Fahrzeugkarosserie 6 insbesondere einer Fahrzeugtür optimiert werden. So kann beispielsweise die Auswahl eines Dichtungsstrangs 4 aus mehreren gleichartigen Dichtungssträngen mithilfe des dem Dichtungsstrang 4 zugeordneten insbesondere elektronisch auslesbaren Identifikationsmittel 5 erfolgen.

Beispielsweise können mehrere gleichartige Profilstränge oder Dichtungsstränge vorhanden sein, deren physikalische und/oder geometrische Eigenschaften innerhalb einer vorgegebenen Fertigungstoleranz liegen und damit grundsätzlich zur Applikation an einer bestimmten Stelle einer Fahrzeugkarosserie bevorzugt geeignet sind. Der Bereich der Fertigungstoleranz kann in mehrere Toleranzbereiche unterteilt werden und die Merkmale über den jeweiligen Toleranzbereich in dem Identifikationsmittel enthalten sein. Hierdurch ermöglichen die Identifikationsmittel eine Zuordnung des jeweiligen Dichtungsstrangs bzw. Profilstrangs zu einem Toleranzbereich. Um eine gleichbleibende Applikationsqualität zu gewährleisten, kann beispielsweise abhängig von dem jeweiligen Toleranzbereich die Applikationseinrichtung angepasst werden, wie in Bezug auf die nachfolgenden Figuren noch näher erläutert wird.

Alternativ oder zusätzlich kann bei der Applikation ein neuer Dichtungsstrang ausgewählt werden, welcher gemäß dem Identifikationsmittel im Vergleich zu einem zuletzt applizierten gleichartigen Dichtungsstrang die kleinsten Abweichungen in einer oder mehreren physikalischen und/oder geometrischen Eigenschaften aufweist und/oder in einem gleichen oder ähnlichen Toleranzbereich liegt. Wie anhand der nachfolgenden Figuren beschrieben wird, kann hierdurch die Applikationsqualität deutlich erhöht werden.

In Figur 2 ist eine Schnittdarstellung eines Dichtungsstrangs 4 an einer Fahrzeugkarosserie 6 in einem Applikationsschritt gezeigt. Der Dichtungsstrang 4 ist durch Abtrennen von dem in Figur 1 gezeigten Profilstrang 3 gebildet und wird mittels der Applizierrolle 7 mit der Fahrzeugtür gefügt. Die Applizierrolle 7 drückt den Dichtungsstrang 4 gegen die Fahrzeugtür 6 an, wobei ein zwischen dem Dichtungsstrang 4 und der Fahrzeugtür 6 angeordnetes Verbindungsmittel 8 in Form eines Klebebands eine sichere Befestigung des Dichtungsstrangs 4 an der Fahrzeugtür 6 ermöglicht. Die Applizierrolle 7 umfasst eine in radialer Richtung offene, in Umfangsrichtung verlaufende Nut, in welcher der Dichtungsstrang 4 während der Applikation teilweise aufgenommen und gehalten ist. Abhängig von den physikalischen und/oder geometrischen Eigenschaften des Dichtungsstrangs 4 ist dabei die Positionierung des Dichtungsstrangs 4 an der Fahrzeugtür 6 trotz identischer Positionierung der Applizierrolle 7 relativ zu der Fahrzeugtür 6 nicht immer gleich. Beispielsweise können innerhalb der Fertigungstoleranz liegende Abweichungen der Wandstärke des Dichtungsstrangs 4 oder des Reibwerts des in Kontakt mit der Applizierrolle 7 stehenden und ggf. mit Gleitlack oder einer Beflockung versehenen Teils des Dichtungsstrangs 4 zu einer unterschiedlichen Positionierung des Dichtungsstrangs 4 in Bezug auf die Applizierrolle 7 führen, woraus auch eine unterschiedliche Positionierung des Dichtungsstrangs 4 zu der Fahrzeugtür 6 resultiert.

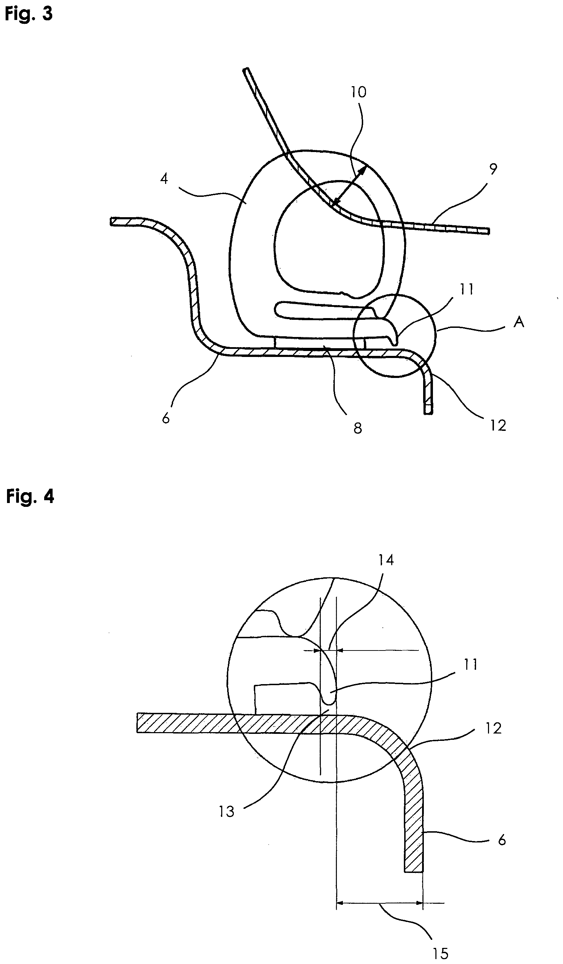

In Figur 3 ist eine Schnittdarstellung eines an einer Fahrzeugtür 6 befestigten Dichtungsstrangs 4 gezeigt. Der Dichtungsstrang 4 befindet sich in einem unverformten Zustand, wie dies der Fall ist, wenn die in Figur 2 gezeigte Applizierrolle 7 entfernt wird. Zusätzlich zu der Fahrzeugtür 6 ist noch ein weiteres Karosserieteil in Form einer Fahrzeugseitenwand 9 dargestellt. Aus dem Vergleich zwischen dem unverformten Dichtungsstrang 4 und der Position der Fahrzeugseitenwand 9 lässt sich die Überlappung 10 ermitteln, welche in der Realität entgegen der Darstellung zu einer Verformung und damit dichtenden Anlage des Dichtungsstrangs 4 an der Fahrzeugseitenwand 9 führt. In der gezeigten Ausführungsform weist der Dichtungsstrang 4 zudem eine vorstehende Dichtlippe 11 auf, welche in der Nähe einer abgerundeten Kante 12 der Fahrzeugtür 6 angeordnet ist.

Wie der Detailansicht des Bereichs A von Figur 3 in Figur 4 zu entnehmen ist, ist zwischen der Dichtlippe 11 und der Fahrzeugtür 6 ein definierter Spalt 13 vorgesehen. Abhängig von der Positionierung des Dichtungsstrangs 4 an der Fahrzeugtür 6 kann aufgrund der Abweichungen zwischen den Dichtungssträngen die Dichtungslippe 11 näher oder weiter entfernt von der abgerundeten Kante 12 angeordnet sein, wodurch auch die Größe des Spalt 13 ungewollt beeinflusst wird. Der sich im Vergleich zu Dichtungssträngen mit einem anderen Toleranzbereich aufgrund einer unterschiedlichen Positionierung der Dichtungsstränge 4 ergebende seitliche Versatz 14 sowie der Abstand 15 zwischen der Dichtlippe 11 und der abgerundeten Kante 12 sind ebenfalls dargestellt.

Wie den Figuren zu entnehmen ist, hat die korrekte Positionierung des Dichtungsstrangs 4 an der Fahrzeugtür 6 einen erheblichen Einfluss auf die Spaltmaße und die Verformung des Dichtungsstrangs in der verformten Dichtungsstellung von Figur 3. Es ist daher unter anderem für das optische Erscheinungsbild von konstanten Spaltmaßen sowie die Qualität der Abdichtung äußerst wichtig, dass die Positionierung des Dichtungsstrangs unabhängig von dem Toleranzbereich des Dichtungsstrangs immer an der gewünschten Position erfolgt.

Werden mehrere Spulen mit je einem Profilstrang gelagert, kann dem Identifikationsmittel an jeder Spule beispielsweise der Toleranzbereich des betreffenden Profilstrangs und der sich hieraus ergebenden Dichtungsstränge entnommen werden. Dies ermöglicht es, die Reihenfolge der Zuführung der Spulen zu einer den jeweiligen Dichtungsstrang 4 verarbeitenden Applikationseinrichtung entsprechend den Identifikationsmitteln, insbesondere entsprechend dem daraus auslesbaren Toleranzbereich, zu bestimmen. Hierdurch wird gewährleistet, dass einer auf einen bestimmten Toleranzbereich eingestellten Applikationseinrichtung, welche eine für diesen Toleranzbereich korrekte Positionierung des Dichtungsstrangs 4 an der Fahrzeugkarosserie 6 ermöglicht, immer Dichtungsstränge mit demselben Toleranzbereich zugeführt werden können.

Alternativ oder zusätzlich kann die Applikationseinrichtung derart gegebenenfalls automatisiert verstellbar sein, dass beispielsweise die Positionierung der Applizierrolle 7 relativ zu der Fahrzeugtür 6 in Abhängigkeit von dem Identifikationsmittel 5, insbesondere dem daraus ermittelbaren Toleranzbereich, des jeweiligen Dichtungsstrangs erfolgt, um eine korrekte Positionierung des Dichtungsstrangs 4 an der Fahrzeugtür 6 zu ermöglichen.

Entgegen der gezeigten Ausführungsform kann das Identifikationsmittel mit den individuellen Merkmalen zu dem Dichtungsstrang auch direkt an dem Dichtungsstrang oder einer Verpackung des Dichtungsstrangs angeordnet sein. In diesem Fall kann vorgesehen sein, dass die einzelnen Dichtungsstränge der Applikationseinrichtung ggf. automatisiert entsprechend den Identifikationsmitteln, insbesondere dem daraus ermittelbaren jeweiligen Toleranzbereich, zugeführt werden. Anschließend werden die Dichtungsstränge über die Applikationseinrichtung ggf. unter Verstellung der Applikationseinrichtung bei sich ändernden Toleranzbereichen der Dichtungsstränge an der Fahrzeugtür appliziert.

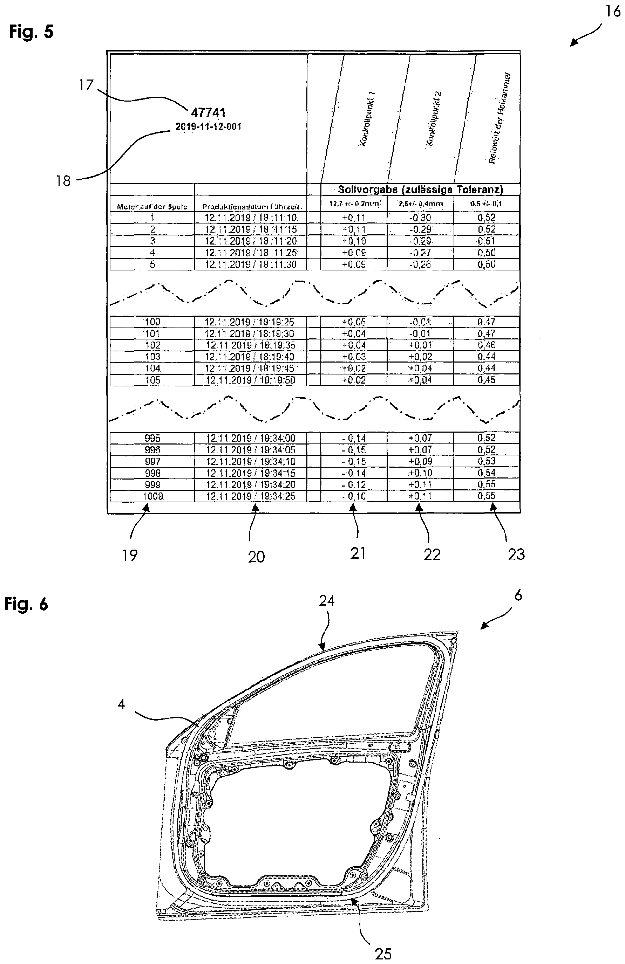

In Figur 5 ist exemplarisch ein Datensatz 16 betreffend individuelle Merkmale eines Profilstrangs und damit der hiervon abtrennbaren Dichtungsstränge gezeigt. Der Datensatz 16 kann beispielsweise in gedruckter Form zusammen mit dem betreffenden Profilstrang/Dichtungsstrang an den Abnehmer geliefert werden. Bevorzugt wird der Datensatz 16 jedoch in digitaler Form beispielsweise auf einem Datenträger, insbesondere einem über das Internet oder einem Netzwerk verfügbaren Datenspeicher (Cloud-Speicher) für den Abnehmer bereitgestellt. Der betreffende Profilstrang oder die Spule mit dem Profilstrang ist mit einem Identifikationsmittel gekennzeichnet, welches eine Zuordnung zu dem Datensatz 16 ermöglicht. Hierzu kann der Datensatz 16 neben einer Teilenummer 17 des Abnehmers auch eine Identifikationsnummer 18 aufweisen.

Wie der Figur 5 weiter zu entnehmen ist, umfasst der Datensatz 16 für eine Vielzahl von Teilbereichen des Profilstrangs, welche in diesem Ausführungsbeispiel jeweils 1 m lang sind, je einen Messwert zu verschiedenen geometrischen und physikalischen Eigenschaften. So ist jedem der in der ersten Spalte 19 aufgelisteten Teilbereiche jeweils in Spalte 20 ein Zeitstempel betreffend das Produktionsdatum/-Uhrzeit, in Spalte 21 ein Längenmaß betreffend die Abweichung eines ersten Kontrollpunkts von der Sollvorgabe; in Spalte 22 ein Längenmaß betreffend die Abweichung eines zweiten Kontrollpunkts von einer Sollvorgabe und eine Spalte 23 betreffend die Abweichung eines Reibwerts von einer Sollvorgabe zugeordnet. Anstelle eines Messwerts je Eigenschaft und Teilbereich können jedoch auch mehrere Messwerte ermittelt und in dem Datensatz der jeweilige Durchschnittswert oder Min-/Max-Wert abgelegt werden. Die Messwerte werden bevorzugt während der Herstellung des Profilstrangs online ermittelt und abgespeichert.

Zur einfacheren Darstellung ist der Datensatz 16 gekürzt abgebildet, der vollständige Datensatz enthält für jeden Meter des Dichtungsstrangs von Meter 1 bis Meter 1000 die entsprechenden Messwerte. Wie auch aus der gekürzten Fassung des Datensatzes deutlich hervorgeht, verändern sich die jeweiligen Messwerte über die Länge des Profilstrangs innerhalb der zulässigen Toleranz kontinuierlich, was beispielsweise mit dem Verschleiß der Maschinen zur Herstellung des Profilstrangs zusammenhängen kann. Dabei sind die geometrischen Abweichungen an den Kontrollpunkten zwischen dem Anfang und dem Ende des Profilstrangs am größten.

Zusätzlich oder alternativ zu der beschriebenen Zuordnung der Dichtungen in Abhängigkeit von den geometrischen und/oder physikalischen Eigenschaften kann auch eine Anpassung bei der Applikation derart erfolgen, dass die Applikationseinrichtung bei der Applikation der Dichtungsstränge an der Fahrzeugkarosserie in Abhängigkeit von den entsprechenden physikalischen und/oder geometrischen Eigenschaften verstellt wird, um eine gleichbleibende Funktion der Dichtung an der Fahrzeugkarosserie zu gewährleisten. Die Funktion der Dichtung kann dabei unterschiedliche Schwerpunkte haben, beispielsweise kann einerseits eine Designfunktion im Vordergrund stehen, welche eine gleichbleibende Positionierung der Dichtung voraussetzt, andererseits kann der Schwerpunkt auch auf der Dichtfunktion mit möglichst gleichbleibenden Schließeigenschaften liegen, wie der nachfolgenden Figur zu entnehmen ist.

In Figur 6 ist eine Seitenansicht auf eine Fahrzeugtür 6 mit einem umlaufenden Dichtungsstrang 4 gezeigt. Durch den Dichtungsstrang 4 wird Fahrzeugtür 6 vollständig gegenüber der entsprechenden Öffnung in der nicht dargestellten Fahrzeugseitenwand abgedichtet. Der Dichtungsstrang 4 weist einen oberen Abschnitt 24, welcher aufgrund der Positionierung an der Oberseite der Fahrzeugtür 6 einfach einsehbar ist, und einen unteren Abschnitt 25, welcher aufgrund der Anordnung an der Unterseite der Fahrzeugtür 6 in Bodennähe schlecht einsehbar ist, auf. Vorteilhaft kann daher bei der Applikation des Dichtungsstrangs 4 die Applikationseinrichtung bzw. die Applizierrolle 7 derart verstellt werden, dass trotz der über die Länge des Dichtungsstrang 4 von Sollwerten abweichenden Eigenschaften, der Dichtungsstrang 4 in dem oberen Abschnitt 24 eine gegenüber der Fahrzeugtür 6 gleichbleibende Position aufweist, also beispielsweise der in Figur 4 gezeigte Abstand 15 gleich bleibt, und in dem unteren Abschnitt 25 derart gegenüber der Fahrzeugtür 6 verschoben ist, so dass eine gleichbleibende Dichtwirkung, also u.a. Dichtfunktion und Schließkraft, gewährleistet wird. Bei der Positionierung des Dichtungsstrangs 4 im unteren Abschnitt 25 kann dabei insbesondere die Positionierung im oberen Abschnitt berücksichtigt werden, so das für die gesamte Fahrzeugtür 6 eine bestimmte Schließkraft eingestellt werden kann.

### Bezuaszeichenliste:

- 1: Transportvorrichtung
- 2: Spule
- 3: Profilstrang
- 4: Dichtungsstrang
- 5: Identifikationsmittel
- 6: Fahrzeugtür
- 7: Applizierrolle
- 8: Verbindungsmittel
- 9: Fahrzeugseitenwand
- 10: Überlappung
- 11: Dichtlippe
- 12: Abgerundete Kante
- 13: Spalt
- 14: Versatz
- 15: Abstand
- 16: Datensatz
- 17: Teilenummer
- 18: Identifikationsnummer
- 19: Erste Spalte des Datensatzes
- 20: Zweite Spalte des Datensatzes
- 21: Dritte Spalte des Datensatzes
- 22: Vierte Spalte des Datensatzes
- 23: Fünfte Spalte des Datensatzes
- 24: Oberer Abschnitt des Dichtungsstrangs
- 25: Unterer Abschnitt des Dichtungsstrangs

## Patentansprüche

1. Dichtungsstrang (4), insbesondere extrudierter Dichtungsstrang, zur Bildung einer Dichtung an einem Kraftfahrzeug, mit einem Identifikationsmittel (5) zur Bereitstellung individueller Merkmale zu dem Dichtungsstrang (4), wobei eine oder mehrere ausgewählte physikalische und/oder geometrische Eigenschaften des Dichtungsstrangs (4) in jeweils einer vorgegebenen Fertigungstoleranz liegen,
**dadurch gekennzeichnet,**
**dass** jede Fertigungstoleranz in mehrere Toleranzbereiche unterteilt ist und das Identifikationsmittel (5) ausgebildet ist, den Zugriff auf einen strangspezifischen Toleranzbereich des gesamten Dichtungsstrangs (4) oder auf Toleranzbereiche von verschiedenen Teilbereichen des Dichtungsstrangs (4) zu ermöglichen.

2. Dichtungsstrang (4) nach Anspruch 1,
**dadurch gekennzeichnet,**
**dass** es sich bei dem Identifikationsmittel (4) um ein elektronisch auslesbares Identifikationsmittel, insbesondere einen Strichcode, einen QR-Code oder einem RFID-Chip, handelt.

3. Dichtungsstrang (4) nach Anspruch 1 oder 2,
**dadurch gekennzeichnet,**
**dass** das Identifikationsmittel (5) ausgebildet ist, den Zugriff auf für die Applikation relevante gesamtheitliche Merkmale des gesamten Dichtungsstrangs (4) oder Merkmale zu verschiedenen Teilbereichen des Dichtungsstrangs (4) zu ermöglichen, insbesondere auf physikalische und/oder geometrische Eigenschaften des Dichtungsstrangs (4) oder der Teilbereiche, wie die Position von Fehlstellen.

4. Vorrichtung (1) zur Aufnahme eines, insbesondere extrudierten, Dichtungsstrangs (4) bei dessen Transport zu einem Verarbeitungsort, mit einem Identifikationsmittel (5) zur Bereitstellung individueller Merkmale zu dem Dichtungsstrang (4) und einer den Dichtungsstrang (4) als Wicklung aufnehmenden Spule (2) , wobei die bewickelte Spule (2) zur vorübergehenden Einbeziehung in einen den Dichtungsstrang (4) unter Drehung der Spule (2) fortlaufend zu einer oder mehrerer Dichtungen an Fahrzeugkarosserien (6) verarbeitenden Applikationseinrichtung vorgesehen ist, wobei eine oder mehrere ausgewählte physikalische und/oder geometrische Eigenschaften des Dichtungsstrangs (4) in jeweils einer vorgegebenen Fertigungstoleranz liegen, **dadurch gekennzeichnet,**
**dass** jede Fertigungstoleranz in mehrere Toleranzbereiche unterteilt ist und das Identifikationsmittel (5) ausgebildet ist, den Zugriff auf einen strangspezifischen Toleranzbereich des gesamten Dichtungsstrangs (4) oder auf Toleranzbereiche von verschiedenen Teilbereichen des Dichtungsstrangs (4) zu ermöglichen.

5. Vorrichtung (1) nach Anspruch 4,
**dadurch gekennzeichnet,**
**dass** es sich bei dem Identifikationsmittel (5) um ein elektronisch auslesbares Identifikationsmittel, insbesondere einen Strichcode, einen QR-Code oder einen RFID-Chip, handelt.

6. Vorrichtung (1) nach Anspruch 4 oder 5,
**dadurch gekennzeichnet,**
**dass** das Identifikationsmittel (5) ausgebildet ist, den Zugriff auf für die Applikation relevante gesamtheitliche Merkmale des gesamten Dichtungsstrangs (4) oder Merkmale zu verschiedenen Teilbereichen des Dichtungsstrangs (4) zu ermöglichen, insbesondere auf physikalische und/oder geometrische Eigenschaften des Dichtungsstrangs (4) oder der Teilbereiche wie die Position von Fehlstellen.

7. Verfahren zur Applikation von Dichtungssträngen (4) an einer Fahrzeugkarosserie (6; 9),wobei vor der Applikation individuelle Merkmale der Dichtungsstränge (4) erfasst werden und die Applikation in Abhängigkeit hiervon angepasst wird,
**dadurch gekennzeichnet,**
**dass** mehrere Dichtungsstränge (4) vorhanden sind, bei denen eine oder mehrere ausgewählte physikalische und/oder geometrische Eigenschaften in jeweils einer vorgegebenen Fertigungstoleranz liegen, wobei jede Fertigungstoleranz in mehrere Toleranzbereiche unterteilt wird und Identifikationsmitteln (5) der Dichtungsstränge (4) die Zuordnung des jeweiligen Dichtungsstrangs (4) zu dem betreffenden Toleranzbereich zu entnehmen ist.

8. Verfahren nach Anspruch 7,
**dadurch gekennzeichnet,**
**dass** die Dichtungsstränge (4) durch Abtrennen von einem auf einer Spule (2) aufgewickelten Profilstrang (3) gebildet werden und individuelle Merkmale der Dichtungsstränge (4) nach dem Abwickeln des Profilstrangs (3) und/oder vor dem Aufwickeln des Profilstrangs (3) auf die Spule (2) erfasst werden.

9. Verfahren nach Anspruch 8,
**dadurch gekennzeichnet,**
**dass** die vor dem Aufwickeln des Profilstrangs (3) auf die Spule (2) erfassten individuellen Merkmale über ein dem Profilstrang (3) bzw. dem Dichtungsstrang (4) zugeordnetes, insbesondere elektronisch auslesbares, Identifikationsmittel (5) zugänglich sind.

10. Verfahren nach Anspruch 9,
**dadurch gekennzeichnet,**
**dass** das Identifikationsmittel (5) ausgebildet ist, den Zugriff auf für die Applikation relevante gesamtheitliche Merkmale des gesamten Profilstrangs (3) oder Merkmale zu verschiedenen Teilbereichen des Profilstrangs (3), insbesondere den abzutrennenden Dichtungssträngen (4), zu ermöglichen, insbesondere auf physikalische und/oder geometrische Eigenschaften des Profilstrangs (3) oder der Teilbereiche wie strangspezifische Toleranzbereiche und/oder Position von Fehlstellen.

11. Verfahren nach einem der Ansprüche 7 bis 10,
**dadurch gekennzeichnet,**
**dass** die Auswahl eines als nächstes zu applizierenden Dichtungsstrangs (4) aus mehreren gleichartigen Dichtungssträngen mit Hilfe der ermittelten individuellen Merkmale bzw. dem Identifikationsmittel (5) erfolgt.

12. Verfahren nach einem der Ansprüche 7 bis 11,
**dadurch gekennzeichnet,**
**dass** die Dichtungsstränge (4) an der Fahrzeugkarosserie (6; 9) mittels einer Applikationseinrichtung appliziert werden, welche in Abhängigkeit der ermittelten Merkmale bzw. des Identifikationsmittels (5) verstellt wird, um eine gleichbleibende Funktion der Dichtungsstränge (4) an den Fahrzeugkarosserien (6; 9) zu gewährleisten.

13. Verfahren nach einem der Ansprüche 7 bis 12,
**dadurch gekennzeichnet,**
**dass** bei der Applikation ein neuer Dichtungsstrang (4) ausgewählt wird, welcher gemäß den individuellen Merkmalen bzw. dem Identifikationsmittel (5) im Vergleich zu einem zuletzt applizierten gleichartigen Dichtungsstrang (4) die kleinsten Abweichungen in einer oder mehreren physikalischen und/oder geometrischen Eigenschaften aufweist und/oder in einem gleichen Toleranzbereich liegt.

14. Verfahren nach einem der Ansprüche 7 bis 13,
**dadurch gekennzeichnet,**
**dass** mehrere Spulen (2) mit je einem Profilstrang (3) vorgehalten werden, wobei jeder Spule jeweils ein insbesondere elektronisch auslesbares Identifikationsmittel (5) zugeordnet ist und die Reihenfolge der Zuführung der Spulen (2) zu einer den Profilstrang (3) verarbeitenden Applikationseinrichtung entsprechend den Identifikationsmitteln (5), insbesondere entsprechend dem daraus auslesbaren Toleranzbereich, erfolgt.

15. Verfahren nach einem der Ansprüche 7 bis 14,
**dadurch gekennzeichnet,**
**dass** die individuellen Merkmale über eine zerstörungsfreie Prüfung, insbesondere bei der Herstellung des Dichtungsstrangs (4), und/oder durch eine Probenentnahme am Anfang, in einem Zwischenbereich und/oder am Ende eines Profilstrangs (3) bzw. Dichtungsstrangs (4), ermittelt werden.

## Claims

1. Sealing strand (4), in particular an extruded sealing strand, for forming a seal on a motor vehicle, with an identification means (5) for providing individual features concerning the sealing strand (4), wherein one or more selected physical and/or geometrical properties of the sealing strand (4) lie within a prescribed production tolerance in each case,
**characterized**
**in that** each production tolerance is divided into a number of tolerance ranges and the identification means (5) is designed to allow access to a strand-specific tolerance range of the entire sealing strand (4) or to tolerance ranges of various subregions of the sealing strand (4).

2. Sealing strand (4) according to Claim 1,
**characterized**
**in that** the identification means (4) is an electronically readable identification means, in particular a barcode, a QR code or an RFID chip.

3. Sealing strand (4) according to Claim 1 or 2,
**characterized**
**in that** the identification means (5) is designed to allow access to overall features of the entire sealing strand (4) relevant to the application or features concerning various subregions of the sealing strand (4), in particular to physical and/or geometrical properties of the sealing strand (4) or the subregions, such as the position of defects.

4. Device (1) for holding a sealing strand (4), in particular an extruded sealing strand (4), during its transport to a processing location, with an identification means (5) for providing individual features concerning the sealing strand (4) and a coil (2) holding the sealing strand (4) as a winding, wherein the wound coil (2) is intended for being temporarily included in an applicator that continously processes the sealing strand (4) into one or more seals on vehicle bodies (6) by turning of the coil (2), wherein one or more selected physical and/or geometrical properties of the sealing strand (4) lie within a prescribed production tolerance in each case,
**characterized**
**in that** each production tolerance is divided into a number of tolerance ranges and the identification means (5) is designed to allow access to a strand-specific tolerance range of the entire sealing strand (4) or to tolerance ranges of various subregions of the sealing strand (4).

5. Device (1) according to Claim 4,
**characterized**
**in that** the identification means (5) is an electronically readable identification means, in particular a barcode, a QR code or an RFID chip.

6. Device (1) according to Claim 4 or 5,
**characterized**
**in that** the identification means (5) is designed to allow access to overall features of the entire sealing strand (4) relevant to the application or features concerning various subregions of the sealing strand (4), in particular to physical and/or geometrical properties of the sealing strand (4) or the subregions, such as the position of defects.

7. Method for the application of sealing strands (4) to a vehicle body (6; 9), wherein before the application individual features of the sealing strands (4) are captured and the application is adapted in dependence on the captured features,
**characterized**
**in that** there are a number of sealing strands (4) for which one or more selected physical and/or geometrical properties lie in a prescribed production tolerance in each case, wherein each production tolerance is divided into a number of tolerance ranges and assignment of the respective sealing strand (4) to the relevant tolerance range can be taken from identification means (5) of the sealing strands (4).

8. Method according to Claim 7,
**characterized**
**in that** the sealing strands (4) are formed by being detached from a profile strand (3) wound up on a coil (2) and individual features of the sealing strands (4) are captured after the unwinding of the profile strand (3) and/or before the winding up of the profile strand (3) onto the coil (2).

9. Method according to Claim 8,
**characterized**
**in that** the individual features captured before the winding up of the profile strand (3) onto the coil (2) are accessible by way of an, in particular electronically readable, identification means (5) assigned to the profile strand (3) or the sealing strand (4).

10. Method according to Claim 9,
**characterized**
**in that** the identification means (5) is designed to allow access to overall features of the entire profile strand (3) relevant to the application or features concerning various subregions of the profile strand (3), in particular the sealing strands (4) to be detached, in particular to physical and/or geometrical properties of the profile strand (3) or the subregions, such as strand-specific tolerance ranges and/or the position of defects.

11. Method according to one of Claims 7 to 10,
**characterized**
**in that** the selection of a sealing strand (4) to be applied next from a number of identical sealing strands takes place with the aid of the individual features determined or the identification means (5).

12. Method according to one of Claims 7 to 11,
**characterized**
**in that** the sealing strands (4) are applied to the vehicle body (6; 9) by means of an applicator, which is adjusted in dependence on the features determined or the identification means (5) in order to ensure a consistent function of the sealing strands (4) on the vehicle bodies (6; 9).

13. Method according to one of Claims 7 to 12,
**characterized**
**in that** in the application the sealing strand selected as a new sealing strand (4) is one which, according to the individual features or the identification means (5), has the smallest deviations in one or more physical and/or geometrical properties and/or is in a same tolerance range in comparison with an identical sealing strand (4) last applied.

14. Method according to one of Claims 7 to 13,
**characterized**
**in that** a number of coils (2) each with a profile strand (3) are kept, wherein each coil is respectively assigned an, in particular electronically readable, identification means (5) and the sequence in which the coils (2) are fed to an application device processing the profile strand (3) takes place in accordance with the identification means (5), in particular in accordance with the tolerance range that can be read from them.

15. Method according to one of Claims 7 to 14,
**characterized**
**in that** the individual features are determined by way of a non-destructive testing, in particular during the production of the sealing strand (4), and/or by a sampling at the beginning, in an intermediate region and/or at the end of a profile strand (3) or sealing strand (4).

## Revendications

1. Cordon d'étanchéité (4), en particulier cordon d'étanchéité extrudé, pour former un joint d'étanchéité au niveau d'un véhicule automobile, comportant un moyen d'identification (5) pour fournir des caractéristiques individuelles concernant le cordon d'étanchéité (4), dans lequel une ou plusieurs propriétés physiques et/ou géométriques sélectionnées du cordon d'étanchéité (4) se situent chacune au sein d'une tolérance de fabrication prédéfinie,
**caractérisé en ce que**
chaque tolérance de fabrication est subdivisée en plusieurs plages de tolérance, et le moyen d'identification (5) est conçu pour permettre l'accès à une plage de tolérance, spécifique au cordon, de l'ensemble du cordon d'étanchéité (4) ou à des plages de tolérance de différentes zones partielles du cordon d'étanchéité (4).

2. Cordon d'étanchéité (4) selon la revendication 1,
**caractérisé en ce que**
le moyen d'identification (4) est un moyen d'identification lisible par voie électronique, en particulier un code à barres, un code QR ou une puce RFID.

3. Cordon d'étanchéité (4) selon la revendication 1 ou 2,
**caractérisé en ce que**
le moyen d'identification (5) est conçu pour permettre l'accès à des caractéristiques globales, pertinentes pour l'application, de l'ensemble du cordon d'étanchéité (4) ou à des caractéristiques concernant différentes zones partielles du cordon d'étanchéité (4), en particulier à des propriétés physiques et/ou géométriques du cordon d'étanchéité (4) ou des zones partielles, telles que la position de défauts.

4. Dispositif (1) de réception d'un cordon d'étanchéité (4), en particulier extrudé, lors de son transport vers un lieu de traitement, comportant un moyen d'identification (5) pour fournir des caractéristiques individuelles concernant le cordon d'étanchéité (4), et une bobine (2) recevant le cordon d'étanchéité (4) sous la forme d'un enroulement,
dans lequel
la bobine (2) pourvue de l'enroulement est prévue pour être intégrée temporairement dans un appareil d'application traitant le cordon d'étanchéité (4) en continu, en faisant tourner la bobine (2), pour donner un ou plusieurs joints d'étanchéité au niveau de carrosseries de véhicules (6),
une ou plusieurs propriétés physiques et/ou géométriques sélectionnées du cordon d'étanchéité (4) se situent chacune au sein d'une tolérance de fabrication prédéfinie,
**caractérisé en ce que**
chaque tolérance de fabrication est subdivisée en plusieurs plages de tolérance, et le moyen d'identification (5) est conçu pour permettre l'accès à une plage de tolérance, spécifique au cordon, de l'ensemble du cordon d'étanchéité (4) ou à des plages de tolérance de différentes zones partielles du cordon d'étanchéité (4).

5. Dispositif (1) selon la revendication 4,
**caractérisé en ce que**
le moyen d'identification (5) est un moyen d'identification lisible par voie électronique, en particulier un code à barres, un code QR ou une puce RFID.

6. Dispositif (1) selon la revendication 4 ou 5,
**caractérisé en ce que**
le moyen d'identification (5) est conçu pour permettre l'accès à des caractéristiques globales, pertinentes pour l'application, de l'ensemble du cordon d'étanchéité (4) ou à des caractéristiques concernant différentes zones partielles du cordon d'étanchéité (4), en particulier à des propriétés physiques et/ou géométriques du cordon d'étanchéité (4) ou des zones partielles, telles que la position de défauts.

7. Procédé d'application de cordons d'étanchéité (4) au niveau d'une carrosserie de véhicule (6 ; 9), dans lequel des caractéristiques individuelles des cordons d'étanchéité (4) sont saisies avant l'application, et l'application est adaptée en fonction de celles-ci,
**caractérisé en ce que**
il existe plusieurs cordons d'étanchéité (4) dans lesquels une ou plusieurs propriétés physiques et/ou géométriques sélectionnées se situent chacune au sein d'une tolérance de fabrication prédéfinie, chaque tolérance de fabrication étant subdivisée en plusieurs plages de tolérance, et des moyens d'identification (5) des cordons d'étanchéité (4) permettent de déterminer l'affectation du cordon d'étanchéité (4) respectif à la plage de tolérance concernée.

8. Procédé selon la revendication 7,
**caractérisé en ce que**
les cordons d'étanchéité (4) sont formés par séparation à partir d'un cordon profilé (3) enroulé sur une bobine (2), et des caractéristiques individuelles des cordons d'étanchéité (4) sont saisies après le déroulement du cordon profilé (3) et/ou avant l'enroulement du cordon profilé (3) sur la bobine (2).

9. Procédé selon la revendication 8,
**caractérisé en ce que**
les caractéristiques individuelles saisies avant l'enroulement du cordon profilé (3) sur la bobine (2) sont accessibles par l'intermédiaire d'un moyen d'identification (5), en particulier lisible par voie électronique, associé au cordon profilé (3) ou au cordon d'étanchéité (4).

10. Procédé selon la revendication 9,
**caractérisé en ce que**
le moyen d'identification (5) est conçu pour permettre l'accès à des caractéristiques globales, pertinentes pour l'application, de l'ensemble du cordon profilé (3) ou à des caractéristiques concernant différentes zones partielles du cordon profilé (3), en particulier concernant les cordons d'étanchéité (4) à séparer, en particulier l'accès à des propriétés physiques et/ou géométriques du cordon profilé (3) ou des zones partielles telles que des plages de tolérance spécifiques au cordon et/ou la position de défauts.

11. Procédé selon l'une des revendications 7 à 10,
**caractérisé en ce que**
la sélection d'un cordon d'étanchéité (4) suivant à appliquer parmi plusieurs cordons d'étanchéité de même type est effectuée à l'aide des caractéristiques individuelles déterminées ou du moyen d'identification (5).

12. Procédé selon l'une des revendications 7 à 11,
**caractérisé en ce que**
les cordons d'étanchéité (4) sont appliqués au niveau de la carrosserie de véhicule (6 ; 9) au moyen d'un appareil d'application qui est déplacé en fonction des caractéristiques déterminées ou du moyen d'identification (5), afin de garantir un fonctionnement constant des cordons d'étanchéité (4) au niveau des carrosseries de véhicule (6 ; 9).

13. Procédé selon l'une des revendications 7 à 12,
**caractérisé en ce que**
lors de l'application, un nouveau cordon d'étanchéité (4) est sélectionné qui, selon les caractéristiques individuelles ou le moyen d'identification (5), présente les plus petits écarts dans une ou plusieurs propriétés physiques et/ou géométriques par rapport à un cordon d'étanchéité (4) de même type appliqué en dernier lieu et/ou qui se situe dans une même plage de tolérance.

14. Procédé selon l'une des revendications 7 à 13,
**caractérisé en ce que**
plusieurs bobines (2) sont stockées, qui comportent chacune un cordon profilé (3), et un moyen d'identification (5), en particulier lisible par voie électronique, est associé à chaque bobine, et l'ordre chronologique d'amenée des bobines (2) à un appareil d'application traitant le cordon profilé (3) est déterminé en fonction des moyens d'identification (5), en particulier en fonction de la plage de tolérance lisible à partir de ceux-ci.

15. Procédé selon l'une des revendications 7 à 14,
**caractérisé en ce que**
les caractéristiques individuelles sont déterminées par un contrôle non destructif, en particulier lors de la fabrication du cordon d'étanchéité (4), et/ou par un prélèvement d'échantillon au début, dans une zone intermédiaire et/ou à la fin d'un cordon profilé (3) ou d'un cordon d'étanchéité (4).
